Europäisches Patentamt
European Patent Office
Office européen des brevets

(11)  **EP 1 271 304 B1**

(12)  **EUROPÄISCHE PATENTSCHRIFT**

(45) Veröffentlichungstag und Bekanntmachung des Hinweises auf die Patenterteilung:
**05.03.2008   Patentblatt 2008/10**

(51) Int Cl.:
***G06F 7/72*** *(2006.01)*

(21) Anmeldenummer: **02100718.2**

(22) Anmeldetag: **18.06.2002**

(54) **Verfahren zur Berechnung der modularen Inversen zweier Zahlen**

Method for calculating the modular inverses of two numbers

Procédé pour le calcul des inverses modulaires de deux nombres

(84) Benannte Vertragsstaaten:
**AT BE CH CY DE DK ES FI FR GB GR IE IT LI LU MC NL PT SE TR**

(30) Priorität: **20.06.2001  DE 10129643**

(43) Veröffentlichungstag der Anmeldung:
**02.01.2003   Patentblatt 2003/01**

(73) Patentinhaber: **NXP B.V.**
**5656 AG Eindhoven (NL)**

(72) Erfinder: **Böh, Frank**
**52066 Aachen (DE)**

(74) Vertreter: **Volmer, Georg et al**
**Philips Intellectual Property & Standards GmbH**
**Postfach 50 04 42**
**52088 Aachen (DE)**

(56) Entgegenhaltungen:
- **BRUCE SCHNEIER ED - SCHNEIER B: "Applied Cryptography" APPLIED CRYPTOGRAPHY. PROTOCOLS, ALGORITHMS, AND SOURCE CODE IN C, NEW YORK, NY : JOHN WILEY & SONS, US, 1996, Seiten 246-248, XP002168658 ISBN: 0-471-11709-9**
- **COFFEY T ET AL: "Realisation of a minimum-knowledge identification and signature scheme" COMPUTERS & SECURITY, ELSEVIER SCIENCE PUBLISHERS. AMSTERDAM, NL, Bd. 17, Nr. 3, 1998, Seiten 253-264, XP004130085 ISSN: 0167-4048**
- **NAOFUMI TAKAGI: "A MODULAR INVERSION HARDWARE ALGORITHM WITH A REDUNDANT BINARY REPRESENTATION" IEICE TRANSACTIONS ON INFORMATION AND SYSTEMS, INSTITUTE OF ELECTRONICS INFORMATION AND COMM. ENG. TOKYO, JP, Bd. E76-D, Nr. 8, 1. August 1993 (1993-08-01), Seiten 863-869, XP000397299 ISSN: 0916-8532**
- **KOBAYASI T ET AL: "FAST MODULAR INVERSION ALGORITHM TO MATCH ANY OPERATION UNIT" IEICE TRANSACTIONS ON FUNDAMENTALS OF ELECTRONICS, COMMUNICATIONS AND COMPUTER SCIENCES, INSTITUTE OF ELECTRONICS INFORMATION AND COMM. ENG. TOKYO, JP, Bd. E82-A, Nr. 5, Mai 1999 (1999-05), Seiten 733-740, XP000861716 ISSN: 0916-8508**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 271 304 B1

**Beschreibung**

Technisches Gebiet

Die Erfindung betrifft ein Verfahren zur Berechnung der modularen Inversen $u^{-1}(\mathrm{mod}\ v)$ und $v^{-1}(\mathrm{mod}\ u)$ zweier vorgegebener positiver ganzer Zahlen u und v für die Implementation eines kryptographischen Verfahrens in Datenverarbeitungssystemen mit kleinem Arbeitsspeicher. Ferner betrifft sie ein Verfahren zur Verschlüsselung der Datenübertragung in einer Datenverarbeitungseinheit, insbesondere in einer Smartcard, mit dem RSA-Algorithmus sowie eine Datenverarbeitungseinheit, insbesondere eine Smartcard, zur Durchführung der genannten Verfahren.

Stand der Technik

Bei dem zunehmenden Einsatz der elektronischen Datenverarbeitung in allen Lebensbereichen kommt dem Schutz der verarbeiteten Daten vor einem Missbrauch erhöhte Bedeutung zu. Dies gilt insbesondere auch in Verbindung mit Datenverarbeitungseinheiten in Form sogenannter Smartcards, da gerade auf diesen häufig sicherheitskritische Daten wie Kontenguthaben, persönliche Daten, Gesundheitsdaten und dergleichen gespeichert sind.

Zur Verschlüsselung der Datenübertragung eignen sich insbesondere asymmetrische kryptographische Verfahren, welche mit einem privaten Schlüssel und einem öffentlichen Schlüssel arbeiten. Ein weit verbreitetes Verfahren ist dabei der sogenannte RSA-Algorithmus von Rivest, Shamir und Adleman von 1977 (vgl. Rechenberg, Pomberger: Informatik-Handbuch, 2. Auflage, Hanser Verlag München Wien (1999) Kapitel 3.4). Bei diesem Verfahren wählt ein Teilnehmer zur Erzeugung seines Schlüsselpaares zwei große Primzahlen p und q und berechnet hieraus den sogenannten Modulus $n = p \cdot q$ sowie den Wert $\varphi = (p-1) \cdot (q-1)$. Ferner wählt er eine Zufallszahl e < n, die teilerfremd zu $\varphi$ ist, und berechnet das d < n mit $e\ \mathrm{mod}(\varphi) = 1$. Der öffentliche Schlüssel ist dann das Paar (e, n) und der private Schlüssel ist d.

Eine als Zahl m dargestellte, zu verschlüsselnde Nachricht m < n kann nun von ihrem Sender mit Hilfe des öffentlichen Schlüssels e des Empfängers modulo n potenziert werden, um die verschlüsselte Nachricht c zu erzeugen: $c = m^e\ \mathrm{mod}(n)$. Der Empfänger kann durch Potenzierung des Chiffretextes c mit seinem privaten Schlüssel wieder den Klartext erzeugen: $m = c^d\ \mathrm{mod}(n)$.

Die Sicherheit des RSA-Algorithmus liegt in der Schwierigkeit begründet, den Modulus n in die beiden nur dem Eigentümer des privaten Schlüssels bekannten Primzahlen p und q zu zerlegen. Diese Schwierigkeit steigt mit der Länge der Primfaktoren p und q, für welche derzeit Längen zwischen 512 und 1024 Bit üblich sind

Die Bearbeitung derartig langer Primfaktoren stellt insbesondere auf Datenverarbeitungssystemen mit begrenztem zur Verfügung stehendem Arbeitsspeicher ein Problem dar. Aus diesem Grunde ist der RSA-Algorithmus auf Smartcards derzeit typischerweise auf eine Schlüssellänge von 512 bis ca. 700 Bit begrenzt.

Darstellung der Erfindung

Vor diesem Hintergrund war es Aufgabe der vorliegenden Erfindung ein Verfahren und eine Datenverarbeitungseinheit zur Verfügung zu stellen, mit denen eine sichere Verschlüsselung der Datenübertragung insbesondere auch bei Vorhandensein eines nur kleinen Arbeitsspeichers möglich ist.

Diese Aufgabe wird durch ein Verfahren mit den Merkmalen der Ansprüche 1 und 2 sowie einem Computerprogrammprodukt mit den Merkmalen des Anspruchs 4 gelöst. Vorteilhafte Ausgestaltungen sind in den Unteransprüchen enthalten.

Die Erfindung betrifft demnach zunächst ein Verfahren zur Berechnung der modularen Inversen $u^{-1}(\mathrm{mod}\ v)$ und $v^{-1}(\mathrm{mod}\ u)$ zweier vorgegebener positiver ganzer Zahlen u und v. Die Inverse einer ganzen Zahl u modulo einer anderen ganzen Zahl v ist dabei - falls sie existiert - als diejenige Zahl $x := u^{-1}(\mathrm{mod}\ v)$ definiert, für die gilt: $u \cdot x(\mathrm{mod}\ v) = 1$. Bei der Implementation eines RSA-Algorithmus wird die Berechnung der modularen Inversen benötigt, um aus der Zufallszahl e den privaten Schlüssel d zu berechnen. Aufgrund der Größe der dabei beteiligten ganzen Zahlen u, v, die den Primfaktoren p und q entsprechen, hat dieses Verfahren einen erheblichen Bedarf an Arbeitsspeicher. Dieser Bedarf ist auf Datenverarbeitungssystemen mit kleinem Arbeitsspeicher letztendlich der begrenzende Faktor für die Größe der im RSA-Algorithmus verwendbaren Schlüssel. Das Verfahren ist durch die folgenden Schritte gekennzeichnet:

    a) Definition der Größen

$$a_0 := u,$$
$$b_0 := v,$$
$$ax_0 := 1,$$
$$ay_0 = 0,$$
$$bx_0 := 0,$$

$by_0 := 1.$

b) Sukzessive Berechnung für k = 0; 1; 2; 3; ... bis kmax von

b1) falls $a_k < b_k$:

$a_{k+1} := a_k$
$b_{k+1} := b_k - a_k$
$ax_{k+1} := ax_k$
$ay_{k+1} := ay_k$
$bx_{k+1} := bx_k + ax_k$
$by_{k+1} := by_k + ay_k$

b2) falls $a_k \geq b_k$:

$a_{k+1} := a_k - b_k$
$b_{k+1} := b_k$
$ax_{k+1} := ax_k + bx_k$
$ay_{k+1} := ay_k + by_k$
$bx_{k+1} := bx_k$
$by_{k+1} := by_k$

wobei die Berechnung der Folgen bei dem Index kmax beendet wird, für den $a_{kmax} = 0$ ist.

c) Falls $b_{kmax} = 1$ ist, setze die gesuchten modularen Inversen zu

$u^{-1}(\text{mod } v) = -bx_{kmax}$
$v^{-1}(\text{mod } u) = by_{kmax},$

wobei das Verfahren von einer Datenverarbeitungseinheit durchgeführt wird und die Aufteilung des zur Verfügung stehenden Arbeitsspeichers dynamisch dem Speicherplatzbedarf der Variablen $(a_k, b_k, ax_k, bx_k, ay_k, by_k)$ angepasst wird.

Das oben dargestellte Verfahren hat gegenüber den bisher bekannten Verfahren (zum Beispiel dargestellt bei Bruce Schneier, "Applied Cryptography", 2. Auflage 1996, Seite 247) den Vorteil eines erheblich verringerten Arbeitsspeicherbedarfes. Dies hat seinen Grund darin, dass die Speicherplätze, die für die Variablen $a_k$ und $b_k$ benötigt werden, im Mittel im selben Maße abnehmen, wie der Speicherplatzbedarf für die Variablen $ax_k$, $ay_k$, $bx_k$ und $by_k$ zunimmt, da in jedem Iterationsschritt b) auf die beiden verschiedenen Variablentypen die jeweils gegenläufigen Operationen der Addition bzw. Subtraktion ausgeübt werden. Bei dem Verfahren werden die Manipulationen an den Größen $a_k$ und $b_k$ gemäß dem bekannten Euklidischen Algorithmus zur Berechnung des größten gemeinsamen Teilers von u und v vorgenommen. Die restlichen Größen werden so manipuliert, dass jederzeit die folgenden Gleichungen gelten:

$$a_k = u \cdot ax_k - v \cdot ay_k$$

$$-b_k = u \cdot bx_k - v \cdot by_k \; .$$

Die Erfindung betrifft weiterhin ein zweites Verfahren zur Berechnung der modularen Inversen $u^{-1}(\text{mod } v)$ und $v^{-1}(\text{mod } u)$ zweier vorgegebener positiver ganzer Zahlen u und v für die Implementation eines kryptographischen Verfahrens in Datenverarbeitungssystemen mit kleinem Arbeitsspeicher. Das Verfahren unterscheidet sich vom oben erläuterten Verfahren dadurch, dass mindestens eine der beiden Zahlen u und/oder v ungerade ist. Es ist durch die folgenden Schritte gekennzeichnet:

a) Definition der Größen

$a_0 := u,$
$b_0 := v,$
$ax_0 := 1,$

$ay_0 := 0,$
$bx_0 := 0,$
$by_0 := 1,$
$z_0 := 0.$

b) Sukzessive Berechnung für k = 0; 1; 2; 3; ... bis kmax von:

$$\alpha_k \quad \text{mit:} \quad a_k = 2^{\alpha k} a'_k \quad \text{und } a'_k \text{ ist ungerade}$$
$$\beta_k \quad \text{mit:} \quad b_k = 2^{\beta k} b'_k \quad \text{und } b'_k \text{ ist ungerade}$$
$$Z_{k+1} := z_k + \alpha_k + \beta_k$$

und

b1) falls $a'_k < b'_k$:

$$a_{k+1} := a'_k$$
$$b_{k+1} := b'_k - a'_k$$
$$ax_{k+1} := 2^{\beta k} ax_k$$
$$ay_{k+1} := 2^{\beta k} ay_k$$
$$bx_{k+1} := 2^{\alpha k} bx_k + 2^{\beta k} ax_k$$
$$by_{k+1} := 2^{\alpha k} by_k + 2^{\beta k} ay_k$$

b2) falls $a'_k \geq b'_k$:

$$a_{k+1} := a'_k - b'_k$$
$$b_{k+1} := b'_k$$
$$ax_{k+1} := 2^{\beta k} ax_k + 2^{\alpha k} bx_k$$
$$ay_{k+1} := 2^{\beta k} ay_k + 2^{\alpha k} by_k$$
$$bx_{k+1} := 2^{\alpha k} bx_k$$
$$by_{k+1} := 2^{\alpha k} by_k$$

wobei die Berechnung der Folgen bei dem Index kmax beendet wird, für den $a_{kmax} = 0$ ist.

c) Falls $b_{kmax} = 1$ ist, berechne sukzessive für k = kmax bis (kmax + $z_{kmax}$ - 1):

$$bx_{k+1} := \begin{cases} bx_k/2 & \text{falls } bx_k \text{ und } by_k \text{ gerade sind} \\ (bx_k+v)/2 & \text{sonst} \end{cases}$$

$$by_{k+1} := \begin{cases} by_k/2 & \text{falls } bx_k \text{ und } by_k \text{ gerade sind} \\ (by_k+u)/2 & \text{sonst} \end{cases}$$

d) Setze die gesuchten modularen Inversen zu

$$u^{-1}(\text{mod } v) = -bx_{kmax+zkmax}$$
$$v^{-1}(\text{mod } u) = by_{kmax+zkmax},$$

wobei das Verfahren von einer Datenverarbeitungseinheit durchgeführt wird und die Aufteilung des zur Verfügung stehenden Arbeitsspeichers dynamisch dem Speicherplatzbedarf der Variablen ($a_k$, $b_k$, $ax_k$, $bx_k$, $ay_k$, $by_k$) angepasst wird.

Das dargestellte Verfahren führt zusätzlich zum oben erläuterten ersten Verfahren ein Herausziehen des Faktors 2 durch, wann immer dieser in Zwischengrößen auftritt. Hierdurch lässt sich unter der geltenden Voraussetzung dass mindestens eine der beiden Ausgangszahlen u, v ungerade ist, eine schnellere Konvergenz des Algorithmus erreichen. Auch bei diesem Algorithmus gilt, dass gegenläufige Operationen parallel ausgeführt werden. Z.B. erfolgt bei Division einer Größe $a_k$ beziehungsweise $b_k$ durch 2 parallel eine Multiplikation der Größen $ax_k$, $ay_k$, $bx_k$ und $by_k$ mit dem Faktor 2, so dass der insgesamt für die Speicherung dieser Variablen benötigte Platzbedarf im Mittel etwa gleich bleibt.

Dadurch, dass der zur Verfügung stehende Arbeitsspeicher dynamisch dem Speicherplatzbedarf für den aktuellen Wert der Variablen $a_k$, $b_k$, $ax_k$, $bx_k$, $ay_k$, $by_k$ angepasst wird, ist es möglich, den begrenzten Arbeitsspeicher optimal auszunutzen, da jede der Variablen den in einer bestimmten Stufe des Algorithmus benötigten Anteil des Arbeitsspeichers zugeteilt bekommt, wobei ein Teil der Größen im Laufe des Verfahrens immer weniger und der Rest der Größen immer mehr Speicherplatz benötigt. Das Verfahren kann dabei insbesondere in Form eines auf der Datenverarbeitungseinheit ablaufenden Computerprogrammes implementiert sein. Vorzugsweise ist ein derartiges Programm in nicht flüchtigen Speichern (ROM, EEPROM etc.) oder Speichermedien (Festplatte, Diskette, CD etc.) abgelegt.

Die Erfindung betrifft ferner ein Verfahren zur Verschlüsselung der Datenübertragung in einer Datenverarbeitungseinheit, insbesondere in einer Smartcard, mit dem RSA-Algorithmus. Das Verfahren ist dadurch gekennzeichnet, dass die Berechnung eines privaten Schlüssels mit Hilfe eines Verfahrens der oben erläuterten Art erfolgt. Da die genannten Verfahren den Arbeitsspeicher besser ausnutzen als bisherige Verfahren, können mit ihnen die modularen Inversen größerer Zahlen, zum Beispiel von Primzahlen mit 1024 Bit Länge, berechnet werden. Dies erlaubt somit die Erzeugung und Verwendung entsprechend langer Schlüssel im RSA-Algorithmus, was dessen Sicherheit entsprechend erhöht.

Zudem ist im Rahmen der Erfindung ein Computerprogrammprodukt vorgesehen, das dazu eingerichtet ist, beim Betrieb auf einem Computer das Verfahren nach einem der Ansprüche 1 bis 3 auszuführen.

Weiterhin betrifft die Erfindung eine Datenverarbeitungseinheit, insbesondere eine Smartcard, welche zur Durchführung eines Verfahrens der oben genannten Art eingerichtet ist. Eine derartige Datenverarbeitungseinheit enthält somit vorzugsweise einen nicht flüchtigen Speicher zur Aufnahme des Programmcodes, welcher ein Verfahren der genannten Art implementiert, sowie einen Arbeitsspeicher zur Speicherung der bei dem Verfahren manipulierten Variablen.

Im Folgenden wird die Erfindung mit Hilfe beispielhafter Programmlistings näher erläutert.

Das erste Listing zeigt zum besseren Verständnis den bekannten sogenannten binären Euklidischen Algorithmus zur Berechnung des größten gemeinsamen Teilers (gcd, "greatest common divisor") zweier Zahlen u, v. Dabei wird angenommen, dass mindestens eine der beiden Zahlen u, v ungerade ist, was es erlaubt, die Variablen a und b gegebenenfalls durch 2 zu dividieren, falls diese zwischendurch geradzahlige Werte annehmen sollten.

```
1    %      Binary Euclidean Algorithm
2    %      Input:
3    %      u, v: positive integers with gcd(gcd(u,v),2) = 1.
4    %      Computes:
5    %      b = gcd(u,v)
6
7    a := u
8    b := v
9
10   while a ◇ O
11          while          (a mod 2) = 0
12                         a := a/2
13          end
```

Das nachfolgende zweite Listing gibt ein Programm für die Realisierung des erfindungsgemäßen Verfahrens zur Berechnung der modularen Inversen wieder:

```
1 % Extended Binary Euclidean Algorithm
% Input:
% u, v: positive integers with gcd(gcd(u,v),2) = 1.
```

```
%
% Computes:
% -bx = rcp(u,v) = (u^ (-1))mod v (if gcd(u,v)=1)
% by = rcp(v,u) = (v^ (-1))mod u (if gcd(u,v)=1)
% b = gcd(u,v)
%
% The algorithm bases on the following set of
% equations, which are fulfilled at each program
% step below that is marked with (*):
% a*(2^exp) = u*ax - v*ay
% -b*(2^exp) = u*bx - v*by


a := u
b := v
ax := 1
ay := 0
bx := 0
by := 1
exp:= 0

while a <> 0
(*)

    while (a mod 2) = 0
          exp := exp+1
           a := a/2 % a is even at this point !
          bx : = bx*2
          by : = by*2
    (*)
       end

    while(b mod 2) = 0
          exp := exp+1
          b : b/2 % b is even at this point !
          ax := ax*2
          ay := ay*2
    (*)
       end

    if a < b
           b := b-a
          bx: = bx+ax
          by := by+ay
       else
             a := a-b
          ax : = ax+bx
          ay := ay+by
       end
(*)

end
% Intermediate results at this point:
% a = 0
% b = gcd (u, v)

while exp > 0
    exp := exp-1

    if ((bx mod 2) <> 0) or ((by mod 2) <> 0)
          bx := bx+v
          by := by+u
       end
```

**6**

```
    bx := bx/2 % bx is even at this point!
    by := by/2 % by is even at this point!
(*)

end
```

Im zweiten Listing ist der oben dargestellte binäre Euklidische Algorithmus um die Berechnung der modularen oder auch multiplikativen Inversen erweitert.

Dieser "Erweiterte Binäre Euklidische Algorithmus" benötigt neben den zwei Eingangswerten u, v (welche im EEPROM abgelegt sein können) weitere sechs im Arbeitsspeicher abgelegte Laufvariablen a, b, ax, ay, bx, by. Um die Betrachtung zu vereinfachen, wird angenommen, dass a und b von der gleichen Größenordnung beziehungsweise Wortlänge L sind. Alle sechs Laufvariablen liegen prinzipiell in der gleichen Größenordnung wie u, v, womit sich im ersten Ansatz der Arbeitsspeicherplatzbedarf za 6*L ergeben würde (wie auch in bestehenden Implementationen).

Die Erfindung setzt hier an und reduziert durch einen veränderten Ablauf des Algorithmus den benötigten Speicherplatz auf 4*L. In der Initialisierungsphase für die Laufvariablen (Zeilen 16 bis 21) werden die Variablen a, b in der vollen Wortlänge von L angelegt, während für ax, ay, bx, by jeweils nur 1 Bit benötigt wird. Damit ergibt sich der anfängliche Arbeitsspeicherverbrauch zu $L*2 + 4$ Bit.

Während die Iterationsschleife (Zeilen 25 bis 57) werden ausschließlich komplementäre Operationen mit den Gruppen a, b respektive ax, ay, bx, by durchgeführt. Wird in der Gruppe a, b durch 2 dividiert, so wird gleichzeitig in der Gruppe ax, ay, bx, by mit 2 multipliziert (Zeilen 29-32 beziehungsweise 38-41). Wird eine Subtraktion mit a, b durchgeführt, wird zugleich eine Addition mit ax, ay, bx, by durchgeführt (Zeilen 47-49 beziehungsweise 51-53). Daraus ergibt sich, dass die benötigte Länge der Laufvariablen a, b im Mittel im gleichen Maß abnimmt, wie die benötigte Länge der Variablen ax, ay, bx, by zunimmt. Der Gesamtbedarf an Arbeitsspeicher nimmt dadurch kontinuierlich zu.

Nach Ende der Iterationsschleife ergibt sich a = 0 beziehungsweise b = gcd(u,v). Für die interessierenden Fälle ergibt sich b = 1. Falls gdc (u, v) > 1, existiert in der Regel kein multiplikatives Inverses. Der benötigte Arbeitsspeicherplatz beläuft sich zu diesem Zeitpunkt auf $L*4 + 2$ Bit.

Die Laufvariablen ax, ay werden nachfolgend nicht mehr verwendet. In der darauffolgenden Schleife, in der sich die Längen der Arbeitsvariablen bx, by nicht ändern, liegt der benötigte Arbeitsspeicherplatzbedarf also bei $L*2$ Bit.

Auf den gesamten Algorithmus betrachtet ist der benötigte Arbeitsspeicherbedarf also immer kleiner oder gleich $L*4 + 2$ Bit. Um das "Wachsen" beziehungsweise "Schrumpfen" der Laufvariablen im Speicher zu ermöglichen, ist eine intelligente Speicherverwaltung notwendig, die kontinuierlich die jeweiligen Variablen auf bevorstehende Überläufe (ax, ay, bx, by) beziehungsweise führende Nullen (a, b) testet und gegebenenfalls eine Neuorganisation durch Verschieben im Arbeitsspeicher vornimmt.

Das erläuterte Verfahren erlaubt es somit unter optimaler Ausnutzung des Arbeitsspeichers, die multiplikative Inverse $u^{-1} (\mod v)$ einer ganzen Zahl u modulo v zu berechnen, welches für die Durchführung eines RSA-Algorithmus benötigt wird. Dabei wird mit zwei Variablen a, b, die mit u und v initialisiert werden, ein Euklidischer Algorithmus zur Berechnung des größten gemeinsamen Teilers von u und v durchgeführt. Parallel werden in jedem Iterations schritt Größen ax, ay, bx, by berechnet, die stets die Gleichungen

$$a = u \cdot ax - v \cdot ay$$

$$-b = u \cdot bx - v \cdot by$$

erfüllen. Am Ende des Algorithmus lautet die gesuchte multiplikative Inverse wie folgt: $u^{-1} (\mod v) = -bx$.

**Patentansprüche**

1.  Verfahren zur Berechnung der modularen Inversen $u^{-1} (\mod v)$ und $v^{-1} (\mod u)$ zweier vorgegebener positiver ganzer Zahlen u und v für die Implementation eines kryptographischen Verfahrens in Datenverarbeitungssystemen mit kleinem Arbeitsspeicher, umfassend die folgenden Schritte:

   a) Definition der Größen

   $a_0 := u,$
   $b_0 := v,$

$$ax_0 := 1,$$
$$ay_0 := 0,$$
$$bx_0 := 0,$$
$$by_0 := 1.$$

b) Sukzessive Berechnung für k = 0; 1; 2; 3; ... bis kmax-1 von

b1) falls $a_k < b_k$:

$$a_{k+1} := a_k$$
$$b_{k+1} := b_k - a_k$$
$$ax_{k+1} := ax_k$$
$$ay_{k+1} := ay_k$$
$$bx_{k+1} := bx_k + ax_k$$
$$by_{k+1} := by_k + ay_k$$

b2) falls $a_k \geq b_k$:

$$a_{k+1} := a_k - b_k$$
$$b_{k+1} := b_k$$
$$ax_{k+1} := ax_k + bx_k$$
$$ay_{k+1} := ay_k + by_k$$
$$bx_{k+1} := bx_k$$
$$by_{k+1} := by_k$$

wobei die Berechnung der Folgen bei dem Index kmax beendet wird, für den $a_{kmax} = 0$ ist.

c) Falls $b_{kmax} = 1$ ist, setze die gesuchten modularen Inversen zu

$$u^{-1}(\mod v) = -bx_{kmax}$$
$$v^{-1}(\mod u) = by_{kmax},$$

wobei das Verfahren von einer Datenverarbeitungseinheit durchgeführt wird und die Aufteilung des zur Verfügung stehenden Arbeitsspeichers dynamisch dem Speicherplatzbedarf der Variablen ($a_k, b_k, ax_k, bx_k, ay_k, by_k$) angepasst wird.

2. Verfahren zur Berechnung der modularen Inversen $u^{-1}(\mod v)$ und $v^{-1}(\mod u)$ zweier vorgegebener positiver ganzer Zahlen u und v, wobei u und/oder v ungerade ist, für die Implementation eines kryptographischen Verfahrens in Datenverarbeitungssystemen mit kleinem Arbeitsspeicher, umfassend die folgenden Schritte:

a) Definition der Größen

$$a_0 := u,$$
$$b_0 := v,$$
$$ax_0 := 1,$$
$$ay_0 := 0,$$
$$bx_0 := 0,$$
$$by_0 := 1,$$
$$z_0 := 0.$$

b) Sukzessive Berechnung für k = 0; 1; 2; 3; ... bis kmax-1 von:

$$\alpha_k \quad \text{mit:} \quad a_k \quad = 2^{\alpha k} a'_k \quad \text{und } a'_k \text{ ist ungerade}$$
$$\beta_k \quad \text{mit:} \quad b_k \quad = 2^{\beta k} b'_k \quad \text{und } b'_k \text{ ist ungerade}$$
$$z_{k+1} \quad := z_k + \alpha_k + \beta_k$$

und

b1) falls $a'_k < b'_k$:

$$a_{k+1} := a'_k$$
$$b_{k+1} := b'_k - a'_k$$
$$ax_{k+1} := 2^{\beta k} ax_k$$
$$ay_{k+1} := 2^{\beta k} ay_k$$
$$bx_{k+1} := 2^{\alpha k} bx_k + 2^{\beta k} ax_k$$
$$by_{k+1} := 2^{\alpha k} by_k + 2^{\beta k} ay_k$$

b2) falls $a'_k \geq b'_k$:

$$a_{k+1} := a'_k - b'_k$$
$$b_{k+1} := b'_k$$
$$ax_{k+1} := 2^{\beta k} ax_k + 2^{\alpha k} bx_k$$
$$ay_{k+1} := 2^{\beta k} ay_k + 2^{\alpha k} by_k$$
$$bx_{k+1} := 2^{\alpha k} bx_k$$
$$by_{k+1} := 2^{\alpha k} by_k$$

wobei die Berechnung der Folgen bei dem Index kmax beendet wird, für den $a_{kmax} = 0$ ist

c) falls $b_{kmax} = 1$ ist, berechne sukzessive für $k = kmax$ bis $(kmax + z_{kmax} - 1)$:

$$bx_{k+1} := \begin{cases} bx_k/2 & \text{falls } bx_k \text{ und } by_k \text{ gerade sind} \\ (bx_k+v)/2 & \text{sonst} \end{cases}$$

$$by_{k+1} := \begin{cases} by_k/2 & \text{falls } bx_k \text{ und } by_k \text{ gerade sind} \\ (by_k+u)/2 & \text{sonst} \end{cases}$$

d) setze die gesuchten modularen Inversen zu

$$u^{-1}(\text{mod } v) = -bx_{kmax+zkmax}$$
$$v^{-1}(\text{mod } u) = by_{kmax+zkmax},$$

wobei das Verfahren von einer Datenverarbeitungseinheit durchgeführt wird und die Aufteilung des zur Verfügung stehenden Arbeitsspeichers dynamisch dem Speicherplatzbedarf der Variablen ($a_k$, $b_k$, $ax_k$, $bx_k$, $ay_k$, $by_k$) angepasst wird.

3. Verfahren zur Verschlüsselung der Datenübertragung in einer Datenverarbeitungseinheit, insbesondere in einer Smartcard, mit dem RSA-Algorithmus, **dadurch gekennzeichnet, dass** die Berechnung eines privaten Schlüssels mit Hilfe eines Verfahrens nach mindestens einem der Ansprüche 1 bis 2 erfolgt.

4. Computerprogrammprodukt, das dazu eingerichtet ist, beim Betrieb auf einem Computer das Verfahren nach einem der Ansprüche 1 bis 3 auszuführen.

**Claims**

1. A method of calculating the modular inverse values $u^{-1}$ (mod v) and $V^{-1}$ (mod u) of two predetermined positive integers u and v for the implementation of a cryptographic method in data processing systems with a small working memory, the method comprising the following steps of:

a) Definition of the values

$a_0 := u,$
$b_0 := v,$
$ax_0 := 1,$
$ay_0 := 0,$
$bx_0 := 0,$
$by_0 := 1.$

b) Successive calculation for $k = 0; 1; 2; 3; \ldots$ to kmax of

b1) if $a_k < b_k$:

$a_{k+1} := a_k$
$b_{k+1} := b_k - a_k$
$ax_{k+1} := ax_k$
$ay_{k+1} := ay_k$
$bx_{k+1} := bx_k + ax_k$
$by_{k+1} := by_k + ay_k$

b2) if $a_k \geq b_k$:

$a_{k+1} := a_k - b_k$
$b_{k+1} := b_k$
$ax_{k+1} := ax_k + bx_k$
$ay_{k+1} := ay_k + by_k$
$bx_{k+1} := bx_k$
$by_{k+1} := by_k$

wherein the calculation of the sequences at which the index kmax is ended is $a_{kmax} = 0$
c) If $b_{kmax} = 1$, set the searched modular inverse values to

$u^{-1}(\bmod v) = -bx_{kmax}$
$v^{-1}(\bmod u) = by_{kmax},$

where the method is carried out by a data processing unit and the division of the available working memory is dynamically adapted to the required memory space of the variables ($a_k$, $b_k$, $ax_k$, $bx_k$, $ay_k$, $by_k$).

2. A method of calculating the modular inverse values $u^{-1}(\bmod v)$ and $v^{-1}(\bmod u)$ of two predetermined positive integers u and v, in which u and/or v is odd, for the implementation of a cryptographic method in data processing systems with a small working memory, the method comprising following the steps of:

a) Definition of the values

$a_0 := u,$
$b_0 := v,$
$ax_0 := 1,$
$ay_0 := 0,$
$bx_0 := 0,$
$by_0 := 1,$
$z_0 := 0.$

b) Successive calculation for $k = 0; 1; 2; 3; \ldots$ to kmax of:

$$\alpha_k \qquad \text{with:} \qquad a_k \qquad = \qquad 2^{\alpha k}\, a'_k \text{ and } a'_k \text{ is odd}$$

(continued)

$$\beta_k \quad \text{with:} \quad b_k \quad = \quad 2^{\beta k} b'_k \text{ and } b'_k \text{ is odd}$$
$$z_{k+1} \quad := \quad z_k + \alpha_k + \beta_k$$

and

b1) If $a'_k < b'_k$:

$$a_{k+1} := a'_k$$
$$b_k+1 := b'_k - a'_k$$
$$ax_{k+1} := 2^{\beta k} ax_k$$
$$ay_{k+1} := 2^{\beta k} ay_k$$
$$bx_{k+1} := 2^{\alpha k} bx_k + 2^{\beta k} ax_k$$
$$by_{k+1} := 2^{\alpha k} by_k + 2^{\beta k} ay_k$$

b2) If $a'_k \geq b'_k$:

$$a_{k+1} := a'_k - b'_k$$
$$b_{k+1} := b'_k$$
$$ax_{k+1} := 2^{\beta k} ax_k + 2^{\alpha k} bx_k$$
$$ay_{k+1} := 2^{\beta k} ay_k + 2^{\alpha k} by_k$$
$$bx_{k+1} := 2^{\alpha k} bx_k$$
$$by_{k+1} := 2^{\alpha k} by_k$$

wherein the calculation of the sequences at which the index kmax is ended is $a_{kmax} = 0$
c) if $b_{kmax} = 1$, successively calculate for $k = kmax$ to $(kmax + z_{max} - 1)$:

$$bx_{k+1} := \begin{cases} bx_k/2 & \text{if } bx_k \text{ and } by_k \text{ are even} \\ \\ (bx_k+v)/2 & \text{else} \end{cases}$$

$$by_{k+1} := \begin{cases} by_k/2 & \text{if } bx_k \text{ and } by_k \text{ are even} \\ \\ (by_k+u)/2 & \text{else} \end{cases}$$

d) set the searched modular inverse values to

$$u^{-1}(\text{mod } v) = -bx_{kmax+zkmax}$$
$$v^{-1}(\text{mod } u) = by_{kmax+zkmax},$$

where the method is carried out by a data processing unit and the division of the available working memory is dynamically adapted to the required memory space of the variables $(a_k, b_k, ax_k, bx_k, ay_k, by_k)$.

3. A method of encrypting the data transmission in a data processing unit, particularly in a smart card, by means of the RSA algorithm, **characterized in that** a private key is calculated by means of a method as claimed in at least one of claims 1 to 2.

4. A computer program product which is arranged, when used on a computer, to carry out the method as claimed in any one of the claims 1 to 3.

**Revendications**

1. Procédé de calcul des inverses modulaires $u^{-1}(\bmod v)$ et $v^{-1}(\bmod u)$ de deux nombres entiers positifs donnés u et v pour l'implémentation d'un procédé cryptographique dans des systèmes de traitement des données avec une petite mémoire centrale, comprenant les étapes suivantes :

a) Définition des grandeurs

$a_0 := u,$
$b_0 := v,$
$ax_0 := 1,$
$ay_0 := 0,$
$bx_0 := 0,$
$by_0 := 1.$

b) Calculs successifs pour k = 0; 1; 2; 3;... jusqu'à kmax-1 de

b1) si $a_k < b_k$ :

$a_{k+1} := a_k$
$b_{k+1} := b_k - a_k$
$ax_{k+1} := ax_k$
$ay_{k+1} := ay_k$
$bx_{k+1} := bx_k + ax_k$
$by_{k+1} := by_k + ay_k$

b2) si $a_k \geq b_k$ :

$a_{k+1} := a_k - b_k$
$b_{k+1} := b_k$
$ax_{k+1} := ax_k + bx_k$
$ay_{k+1} := ay_k + by_k$
$bx_{k+1} := bx_k$
$by_{k+1} := by_k$

sachant que le calcul des suites se termine à l'indice kmax, pour lequel $a_{kmax} = 0$.
c) Si $b_{kmax} = 1$, on pose les inverses modulaires cherchés comme

$u^{-1}(\bmod v) = -bx_{kmax}$
$v^{-1}(\bmod u) = by_{kmax},$

sachant que le procédé est exécuté par une unité de traitement des données et que la répartition de la mémoire de travail disponible est adaptée dynamiquement aux besoins d'espace de mémoire des variables ($a_k$, $b_k$, $ax_k$, $bx_k$, $ay_k$, $by_k$).

2. Procédé de calcul des inverses modulaires $u^{-1}(\bmod v)$ et $v^{-1}(\bmod u)$ de deux nombres entiers positifs donnés u et v, sachant que u et/ou v sont impairs, pour l'implémentation d'un procédé cryptographique dans des systèmes de traitement des données avec une petite mémoire centrale, comprenant les étapes suivantes :

a) Définition des grandeurs

$a_0 := u,$
$b_0 := v,$
$ax_0 := 1,$
$ay_0 := 0,$
$bx_0 := 0,$
$by_0 := 1.$
$z_0 := 0.$

b) Calculs successifs pour k = 0; 1; 2; 3;... jusqu'à kmax-1 de

$$\alpha_k \quad \text{avec}: \quad a_k = 2^{\alpha k} a'_k \quad \text{et } a'_k \text{ est impair}$$
$$\beta_k \quad \text{avec}: \quad b_k = 2^{\beta k} b'_k \quad \text{et } b'_k \text{ est impair}$$
$$z_{k+1} \quad := z_k + \alpha_k + \beta_k$$

et

b1) si $a'_k < b'_k$ :

$$a_{k+1} := a'_k$$
$$b_{k+1} := b'_k - a'_k$$
$$ax_{k+1} := 2^{\beta k} ax_k$$
$$ay_{k+1} := 2^{\beta k} ay_k$$
$$bx_{k+1} := 2^{\alpha k} bx_k + 2^{\beta k} ax_k$$
$$by_{k+1} := 2^k by_k + 2^{\beta k} ay_k$$

b2) si $a'_k \geq b'_k$ :

$$a_{k+1} := a'_k - b'_k$$
$$b_{k+1} := b'_k$$
$$ax_{k+1} := 2^{\beta k} ax_k + 2^{\alpha k} bx_k$$
$$ay_{k+1} := 2^{\beta k} ay_k + 2^{\alpha k} by_k$$
$$bx_{k+1} := 2^{ak} bx_k$$
$$by_{k+1} := 2^{ak} by_k$$

sachant que le calcul des suites se termine à l'indice kmax, pour lequel $a_{kmax} = 0$.

c) Si $b_{kmax} = 1$, on calcule successivement pour k = kmax à (kmax + $z_{kmax}$ - 1):

$$bx_{k+1} := \begin{cases} bx_k/2 & \text{si } bx_k \text{ et } by_k \text{ sont pairs} \\ (bx_k+v)/2 & \text{sinon} \end{cases}$$

$$by_{k+1} := \begin{cases} by_k/2 & \text{si } bx_k \text{ et } by_k \text{ sont pairs} \\ (by_k+u)/2 & \text{sinon} \end{cases}$$

d) On pose les inverses modulaires cherchés comme

$$u^{-1}(\bmod v) = -bx_{kmax+zkmax}$$
$$v^{-1}(\bmod u) = by_{kmax+zkmax},$$

sachant que le procédé est exécuté par une unité de traitement des données et que la répartition de la mémoire de travail disponible est adaptée dynamiquement aux besoins d'espace de mémoire des variables ($a_k$, $b_k$, $ax_k$, $bx_k$, $ay_k$, $by_k$).

3. Procédé pour le codage, par l'algorithme RSA, de la transmission des données dans une unité de traitement des données, en particulier dans une carte à puce, **caractérisé en ce que** le calcul d'une clé privée s'effectue à l'aide d'un procédé selon au moins une des revendications 1 à 2.

4. Produit logiciel pour ordinateur qui est configuré en service pour exécuter sur un ordinateur le procédé selon l'une quelconque des revendications 1 à 3.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **RSA-ALGORITHMUS VON RIVEST ; SHAMIR ; ADLEMAN.** Rechenberg, Pomberger: Informatik-Handbuch. Hanser Verlag, 1977

- **BRUCE SCHNEIER.** *Applied Cryptography,* 1996, vol. 2, 247